# DEMANDE DE BREVET EUROPEEN

(11) **EP 2 860 439 A2**
(43) Date de publication de la demande: **15.04.2015**
(21) Numéro de dépôt: 14306356.8
(22) Date de dépôt: 03.09.2014
(51) Int. Cl.: F17C 13/08

(54) **Système d accrochage de bouteille de gaz médical**

(30) Priorité: 16.09.2013 FR 1358872
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: Frenal, Antoine, 95460 Ezanville (FR); Graviere, Vincent, 92120 Montrouge (FR); Ligonesche, Renaud, 95220 Herblay (FR); Tarantello, Chiara, 92800 Puteaux (FR); Trevisan, Adrien, 92200 Neuilly sur Seine (FR)
(74) Mandataire: Pittis, Olivier

(57) **Abrégé**

L'invention porte sur un système d'accrochage pour récipient de gaz, en particulier pour bouteille de gaz (9), comprenant une embase (1) conçue pour être fixée à un support (10), caractérisé en ce que l'embase (1) comprend un premier bras (3a) et un second bras (3b) dont l'un au moins est mobile en pivotement par rapport à l'autre, et un organe d'activation (4) coopérant avec au moins l'un desdits premier et second bras (3a, 3b) de manière à faire pivoter au moins l'un desdits premier et second bras (3a, 3b) en rapprochement par rapport à l'autre, lorsque ledit organe d'activation (4) est actionné. L'invention concerne aussi un ensemble support/bouteille comprenant un tel système d'accrochage et une bouteille de gaz (9) retenue par les bras (3a, 3b) dudit système d'accrochage.

## Description

La présente invention décrit un système d'accrochage permettant de fixer facilement, de manière stable et en sécurité, un récipient de gaz, en particulier une bouteille de gaz, en particulier de gaz médical, à un support, tel un mur, une paroi, un lit d'hôpital, un brancard, un fauteuil...

Les récipients, en particulier les bouteilles de gaz médical, utilisés notamment en milieu hospitalier, à domicile, dans les services ou véhicules d'urgence doivent pouvoir être fixés à différents supports, tel que mur, paroi, lit d'hôpital, brancard, fauteuil...

Ils doivent donc être dotés d'un système d'accrochage propre porté par le récipient lui-même ou, le cas échéant, il convient d'utiliser un dispositif indépendant permettant son accrochage à un support.

Ainsi, le document EP-A-629812 propose d'aménager une encoche dirigée vers le bas en partie basse du capotage de protection, encore appelé « chapeau », équipant une bouteille de gaz et servant à protéger le robinet ou robinet-détendeur de la bouteille contre les chocs. Cette encoche permet de suspendre la bouteille à divers supports, notamment aux barreaux de lits.

Le document EP-A-2586481 propose d'équiper le capotage de protection d'une bouteille de gaz d'une structure d'accrochage pivotante comprenant deux crochets permettant la suspension de la bouteille notamment aux barreaux de lits hospitaliers.

Par ailleurs, on connait aussi des systèmes muraux destinés à être fixés à un support vertical, par exemple un mur ou une paroi, se présentant sous la forme de paniers ou analogues au sein desquels sont insérés les corps des bouteilles en y étant retenus par des sangles ou similaires.

Cependant, ces systèmes ne sont pas totalement satisfaisants et présentent des inconvénients, à savoir notamment :
- les bouteilles de gaz équipées de capotages de protection à encoche ou crochets d'arrimage ne sont pas fixées de manière stable car elles ne sont pas fixées et peuvent dès lors chuter, notamment si une personne vient par inadvertance heurter la bouteille. Ceci constitue un risque pour l'utilisateur et pour le matériel lui-même. De plus, cela oblige à équiper toutes les bouteilles de capotages de protection spécifique, ce qui peut représenter un cout important.
- les systèmes de type paniers muraux sont encombrants et la manipulation des bouteilles n'est pas toujours aisée. Ainsi, il faut en général soulever la bouteille de gaz pour réaliser son insertion dans un logement du panier, ce qui n'est pas pratique et peut engendrer des blessures pour l'utilisateur.

Le problème à résoudre est dès lors de proposer un système d'accrochage pour récipient de gaz, en particulier pour bouteille de gaz, en particulier de gaz médical, amélioré, c'est-à-dire ne présentant pas tout ou partie des inconvénients susmentionnés, de manière à minimiser toute situation d'instabilité et à limiter les risques de chutes du récipient, notamment d'une bouteille de gaz, et de blessure pour l'utilisateur.

La solution de l'invention est un système d'accrochage pour récipient de gaz, en particulier pour bouteille de gaz, comprenant une embase conçue pour être fixée à un support, en particulier un support vertical, caractérisé en ce que l'embase comprend un premier bras et un second bras dont l'un au moins est mobile en pivotement par rapport à l'autre, et un organe d'activation coopérant avec au moins l'un desdits premier et second bras de manière à faire pivoter au moins l'un desdits premier et second bras en rapprochement par rapport à l'autre, lorsque ledit organe d'activation est actionné.

Selon le cas, le système d'accrochage de l'invention peut comprendre l'une ou plusieurs des caractéristiques techniques suivantes :
- le récipient de gaz est une bouteille de gaz, en particulier une bouteille de gaz médical.
- l'organe d'activation est conçu pour et apte à être actionné par insertion d'une bouteille de gaz entre lesdits premier et second bras, ladite bouteille de gaz venant, lors de son insertion par un utilisateur, exercer une pression mécanique sur ledit organe d'activation.
- lesdits premier et second bras sont mobiles en pivotement.
- lesdits premier et second bras sont mobiles en pivotement autour un même axe ou de deux axes, de préférence deux axes parallèles.
- lesdits premier et second bras sont conçus pour et aptes à pivoter de manière synchrone, c'est-à-dire simultanée. En d'autres termes, le pivotement des deux bras a lieu en même temps ou approximativement en même temps.
- lesdits premier et second bras ont une forme générale en arc de cercle, de préférence en demi-cercle ou en quasi demi-cercle.
- lorsque ledit organe d'activation est actionné par mise en contact avec une bouteille de gaz, ledit organe d'activation agit, directement ou indirectement, sur l'un ou lesdits premier et second bras de manière à faire pivoter au moins l'un desdits premier et second bras et à les rapprocher l'un de l'autre en venant ceinturer ladite bouteille de gaz ou le capotage de protection agencée sur ladite bouteille de gaz.
- l'organe d'activation est agencé sur la face avant de l'embase entre lesdits premier et second bras.
- il comprend un mécanisme de verrouillage permettant de bloquer lesdits premier et second bras en position rapprochée l'un de l'autre, c'est-à-dire en position dite « fermée », lorsqu'une bouteille de gaz est insérée entre lesdits premier et second bras et agit sur l'organe d'activation.
- il comprend un mécanisme de libération actionnable par un utilisateur et agissant sur le mécanisme de verrouillage, lors d'un actionnement dudit mécanisme de libération par l'utilisateur, pour libérer au moins l'un desdits premier et second bras et permettre un pivotement dudit au moins un bras en éloignement par rapport à l'autre bras, de préférence un pivotement simultané ou synchrone des deux bras vers la position dite « ouverte ».
- le mécanisme de libération comprend un organe de libération faisant saillie sur l'embase, de préférence l'organe d'activation est un bouton-poussoir.
- l'organe de libération est porté par l'une des parois latérales ou par la paroi supérieure de l'embase.
- les extrémités des deux bras ont été conformées pour présenter des surfaces d'appui sur l'une ou l'autre desquelles un utilisateur peut exercer une pression, digitale ou manuelle, pour libérer les bras et leur permettre de passer de la position dite « fermée » en position dite « ouverte » et ainsi permettre d'extraire la bouteille.

L'invention concerne aussi un ensemble support/bouteille comprenant un système d'accrochage selon l'invention et une bouteille de gaz retenue par les bras dudit système d'accrochage, de préférence une bouteille d'un gaz médical choisi parmi l'oxygène, l'air, l'air enrichi en oxygène, un mélange N₂O/oxygène, hélium/oxygène ou autre.

La présente invention va maintenant être décrite plus en détail en références aux Figures annexées parmi lesquelles :
- les Figures 1 et 2 représentent un premier mode de réalisation d'un système d'accrochage pour bouteille de gaz selon l'invention,
- la Figure 3 schématise l'insertion d'une bouteille de gaz dans le système d'accrochage de la Figure 1,
- la Figure 4 montre une bouteille de gaz après insertion dans le système d'accrochage de la Figure 1,
- la Figure 5 détaille un capotage de protection particulier conçu pour venir se solidariser à un système d'accrochage pour bouteille de gaz selon l'invention, et
- les Figures 6 et 7 représentent un deuxième mode de réalisation d'un système d'accrochage pour bouteille de gaz selon l'invention.

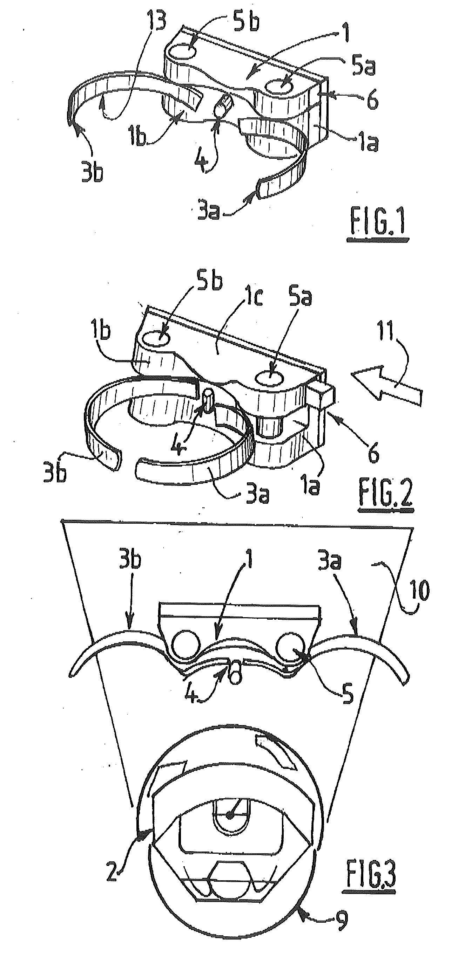

Les Figures 1 et 2 représentent un premier mode de réalisation d'un système d'accrochage pour bouteille de gaz 9 selon la présente invention qui est montré en position dite « ouverte » (Fig. 1) et en position dite « fermée » (Fig. 2).

Plus précisément, le système d'accrochage pour bouteille de gaz 9 des Figures 1 et 2 comprenant une embase 1, c'est-à-dire un socle, conçue pour être fixée à un support 10, tel un mur, une paroi, un lit d'hôpital, un brancard, un fauteuil ou autre. Sa fixation sur le support 10 peut se faire par n'importe quel moyen adapté connu, par exemple par vissage.

L'embase 1 peut être en matière plastique, tel que PVC, PE, PET, PP, PMMA, PU...

Par ailleurs, l'embase 1 comprend deux bras 3a, 3b et un organe d'activation 4 agencé entre lesdits bras 3a, 3b, à savoir les premier bras 3a et second bras 3b. Le premier bras 3a et/ou le second bras 3b sont mobiles en pivotement autour d'un ou plusieurs axes de rotation, de préférence autour de deux axes 5a, 5b, de manière à pouvoir être rapprochés ou éloignés l'un de l'autre par simplement pivotement.

Les bras 3a, 3b pivotent dans le sens tendant à les rapprocher l'un de l'autre lorsqu'ils doivent adopter la position dite « fermée » de la Figure 2, et, à l'inverse, ils pivotent dans sens contraire tendant à les éloigner l'un de l'autre lorsqu'ils doivent adopter la position dite « ouverte » de la Figure 1, comme expliqué ci-après.

L'embase 1 comporte aussi un organe d'activation 4, tel un bouton poussoir, agencé entre lesdits premier et second bras 3a, 3b, et faisant saillie sur la face avant 1b de l'embase 1, c'est-à-dire en se projetant vers l'extérieur comme visible sur la Figure 1, lorsque les bras 3a, 3b sont en position « ouverte ».

L'organe d'activation 4 coopère, quant à lui, avec les premier et second bras 3a, 3b de manière à opérer leur pivotement dans le sens de leur rapprochement l'un de l'autre lorsque ledit organe d'activation 4 est actionné par insertion d'une bouteille de gaz 9 entre lesdits bras 3a, 3b, comme illustré en Figure 3.

Plus précisément, l'insertion par un utilisateur d'une bouteille de gaz médical entre lesdits premier et second bras 3a, 3b va provoquer un contact mécanique entre la bouteille de gaz, par exemple de son capotage, avec l'organe d'activation 4, c'est-à-dire que la bouteille 9 vient appuyer sur l'organe 4.

La force d'appui ainsi créée et exercée par la bouteille 9 va repousser 1 l'organe d'activation 4 en direction de l'embase 1 et engendrer le pivotement des bras 3a, 3b en rapprochement l'un de l'autre, telle les mâchoires d'une pince.

Par exemple, au moins une partie du bouton-poussoir constituant l'organe d'activation 4 va pénétrer dans l'embase 1 et aller appuyer, directement ou indirectement, sur l'extrémité distale des bras 3a, 3b située dans l'embase 1 de manière à engendrer un pivotement de ceux-ci autour des axes 5a, 5b, sous l'effet de la force mécanique qui s'exerce ainsi.

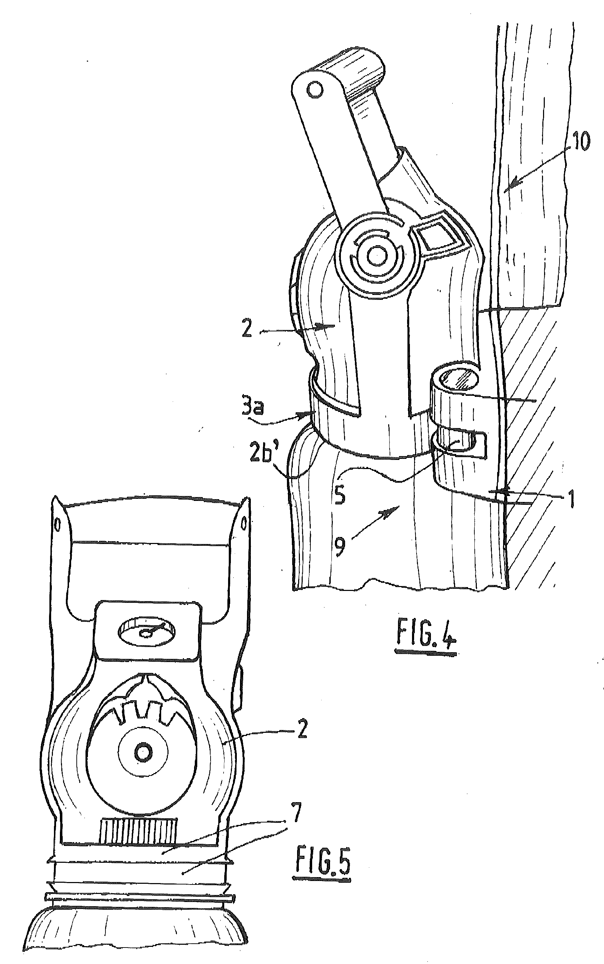

Les bras 3a, 3b vont alors pivoter simultanément, c'est-à-dire de façon synchrone, et passer de la position dite « ouverte » de la Figure 1 à la position dite « fermée » de la Figure 2 et venir alors ceinturer la bouteille 9, par exemple au niveau de son capotage 2, comme montré en Figure 4, de manière à la solidariser à l'embase 1 et à l'y maintenir par l'intermédiaire desdits bras 3a, 3b.

Comme visible sur les Figures, les premier et second bras 3a, 3b ont ici une forme générale en arc de cercle, de préférence en demi-cercle ou en quasi demi-cercle, de manière à venir épouser les contours du fût de la bouteille de gaz 9 ou, selon le mode de réalisation considéré, les contours du capotage de protection 2 équipant la bouteille de gaz 9. Préférentiellement, le profil interne en arc de cercle de la surface intérieure 13 des bras 3a, 3b correspond approximativement au profil externe du fût ou du capotage 2 de la bouteille 9 dans la région où les bras 3a, 3b viennent ceinturer ledit fût ou capotage 2.

Lorsqu'ils sont en position dite « fermée », le pivotement des bras 3a, 3b est bloqué via un mécanisme de verrouillage, agencé dans l'embase 1, de sorte de maintenir lesdits bras 3a, 3b en position rapprochée l'un de l'autre (Figure 4), lorsqu'une bouteille de gaz 9 est positionnée entre eux et agit sur l'organe d'activation 4, comme expliqué ci-avant.

Dans cette position dite « fermée », la bouteille 9 est solidarisée et portée par l'embase 1. Tout risque de chute ou autre est alors écarté. L'insertion de la bouteille 9 entre les deux bras 3a, 3b est extrêmement aisée et ne présente aucun danger pour l'utilisateur.

Selon le mode de réalisation choisi, la bouteille 9 peut être retenue par les bras 3a, 3b soit au niveau de son capotage 2 de protection, soit au niveau de son corps ou fût cylindrique.

En outre, pour permettre de désengager la bouteille 9 du support d'accrochage, est également prévu un mécanisme de libération comprenant un organe de libération 6, tel un bouton-poussoir actionnable par un utilisateur (actionnement dans le sens de la Flèche 11 de la Fig. 2), lequel agit sur le mécanisme de verrouillage de manière à libérer les bras 3a, 3b et permettre leur pivotement en éloignement l'un de l'autre, c'est-à-dire dans le sens tendant à les amener en position dite « ouverte », et ainsi permettre un retrait de la bouteille de gaz 9.

Comme visible sur les Figures 1 et 2, lors de son actionnement par l'utilisateur (sens de la Flèche 11), le bouton-poussoir 6 pénètre, au moins en partie, dans le corps ou boitier de l'embase 1 est agit, directement ou indirectement, sur le mécanisme de verrouillage pour libérer les bras 3a, 3b.

Afin de faciliter le retour des bras 3a, 3b de la position « fermée » à la position « ouverte », ou inversement, et/ou du bouton-poussoir dans sa position non activée (Fig. 1), il peut être prévu dans l'embase 1, un ou des moyens de rappel, tels que des ressorts ou similaires, ou un système à canne avec excentriques.

Dans le mode de réalisation des Figures 1 à 4, la bouteille 9 se fixe de manière frontale et au niveau du col 2b du chapeau ou capotage de protection 2. Toutefois, il est également possible de concevoir le système d'accrochage pour que la fixation se fasse au niveau du fût, c'est-à-dire du corps cylindrique, de la bouteille de gaz 9.

Avantageusement, on prévoit sur le capotage 2 de protection un ou des logements 7, tels un ou des rails ou gorges, au sein desquels viennent se loger les bras 3a, 3b, lorsqu'ils ceinturent le capotage 2 de la bouteille 9, comme illustré en Figure 4, et ainsi améliorer le maintien de la bouteille 9 dans le support d'accrochage de l'invention.

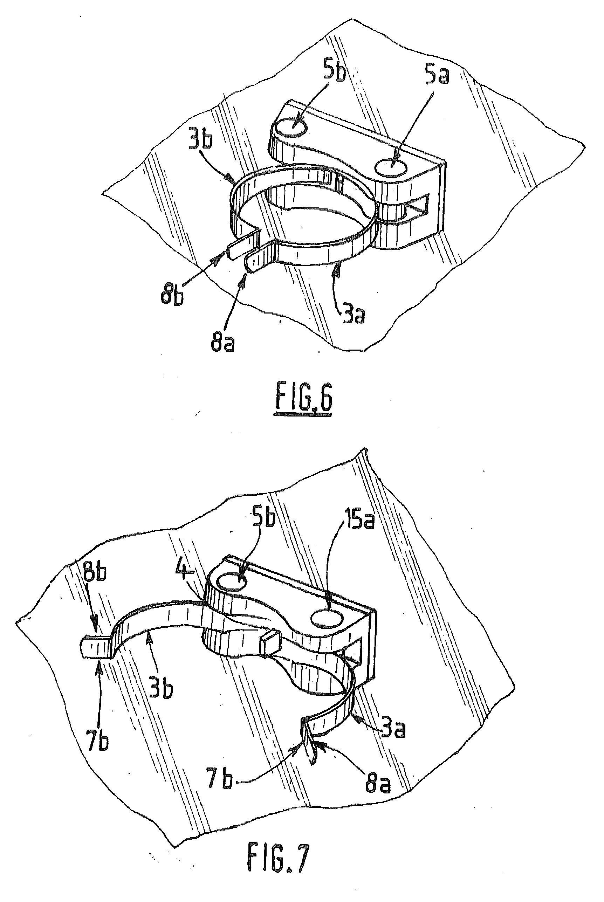

Par ailleurs, les Figures 6 et 7 schématisent un deuxième mode de réalisation d'un système d'accrochage pour bouteille de gaz selon l'invention, dans lequel le mécanisme de libération permettant de désengager la bouteille 9 du support d'accrochage est porté par les extrémités 8a, 8b des deux bras 3a, 3b, respectivement. Dans ce deuxième mode de réalisation, le bouton-poussoir 6 du mode de réalisation des Figures 1 à 3 a donc été supprimé.

Plus précisément, les extrémités 8a, 8b des deux bras 3a, 3b ont été conformées pour permettre à l'utilisateur d'y appliquer une force manuelle ou digitale suffisante pour provoquer un écartement des bras 3a, 3b l'un de l'autre, c'est-à-dire de les éloigner l'un de l'autre par pivotement autour des axes 5a, 5b, sous l'effet de la force d'écartement appliquée par l'utilisateur. Ceci permet de ramener les bras 3a, 3b en position dite « ouverte » et autorise la libération et le retrait concomitant de la bouteille de gaz 9.

Plus précisément, comme visible sur les Figures, les extrémités 8a, 8b des deux bras 3a, 3b ont été conformées pour présenter des surfaces d'appui 7a, 7b se faisant face tout en étant espacées l'une de l'autre, sur lesquelles l'utilisateur peut exercer une pression.

Il suffit que l'utilisateur exerce une force d'écartement, c'est-à-dire exerce une pression manuelle ou digitale, sur l'une seulement des deux extrémités 8a, 8b des bras 3a, 3b pour que la libération de la bouteille 9 se produise. En effet, le mouvement des deux bras 3a, 3b est préférentiellement synchronisé et dès lors, appliquer la force d'écartement sur l'un des bras 3a, 3b va suffire à libérer les deux bras 3a, 3b qui étaient jusque là maintenus en position dite « fermée » par le mécanisme de verrouillage.

Il est à souligner que le système d'accrochage pour bouteille de gaz de l'invention peut également combiner les éléments des deux modes de réalisation susmentionné, à savoir inclure un bouton-poussoir de libération, comme illustré sur les Figures 1 et 2, et par ailleurs présenter des bras pivotants 3a, 3b dont les extrémités 8a, 8b ont été conformées pour présenter des surfaces d'appui 7a, 7b, comme illustré sur les Figures 6 et 7. Ceci offre à l'utilisateur deux possibilités différentes pour libérer la bouteille 9.

Quel que soit le mode de réalisation considéré, le système d'accrochage pour bouteille de gaz de l'invention permet de fixer facilement, de manière stable et en sécurité les bouteilles de gaz médical de diamètres différents de sorte de minimiser les chutes de bouteille et donc de limiter le risque de blessure pour l'utilisateur et de dommage aux équipements.

Dans tous les cas, la présente invention n'est pas limitée au domaine médical et peut être utilisée dans tous les domaines mettant en oeuvre des gaz stockés dans des récipients de gaz, telles des bouteilles, notamment dans les domaines alimentaire, électronique, du soudage/coupage...

## Revendications

1. Système d'accrochage pour récipient de gaz, en particulier pour bouteille de gaz (9), comprenant une embase (1) conçue pour être fixée à un support (10), **caractérisé en ce que** l'embase (1) comprend :
- un premier bras (3a) et un second bras (3b) dont l'un au moins est mobile en pivotement par rapport à l'autre, et
- un organe d'activation (4) coopérant avec au moins l'un desdits premier et second bras (3a, 3b) de manière à faire pivoter au moins l'un desdits premier et second bras (3a, 3b) en rapprochement par rapport à l'autre, lorsque ledit organe d'activation (4) est actionné.

2. Système selon la revendication précédente, **caractérisé en ce que** ledit organe d'activation (4) est conçu pour et apte à être actionné par insertion d'une bouteille de gaz (9) entre lesdits premier et second bras (3a, 3b), ladite bouteille de gaz (9) venant exercer une pression mécanique sur ledit organe d'activation (4).

3. Système selon l'une des revendications précédentes, **caractérisé en ce que** lesdits premier et second bras (3a, 3b) sont mobiles en pivotement.

4. Système selon l'une des revendications précédentes, **caractérisé en ce que** lesdits premier et second bras (3a, 3b) sont conçus pour et aptes à pivoter de manière synchrone ou simultanée.

5. Système selon l'une des revendications précédentes, **caractérisé en ce que** lesdits premier et second bras (3a, 3b) ont une forme générale en arc de cercle.

6. Système selon l'une des revendications précédentes, **caractérisé en ce que**, lorsque ledit organe d'activation (4) est actionné par mise en contact avec une bouteille de gaz (9), l'organe d'activation (4) agit, directement ou indirectement, sur l'un ou lesdits premier et second bras (3a, 3b) de manière à faire pivoter au moins l'un desdits premier et second bras (3a, 3b) et à les rapprocher l'un de l'autre en venant ceinturer ladite bouteille de gaz (9) ou le capotage (2) de protection agencée sur ladite bouteille de gaz (9).

7. Système selon l'une des revendications précédentes, **caractérisé en ce que** l'organe d'activation (4) est agencé sur la face avant (1b) de l'embase (1) entre lesdits premier et second bras (3a, 3b).

8. Système selon l'une des revendications précédentes, **caractérisé en ce qu'**il comprend un mécanisme de verrouillage permettant de bloquer lesdits premier et second bras (3a, 3b) en position rapprochée l'un de l'autre, lorsqu'une bouteille de gaz (9) est insérée entre lesdits premier et second bras (3a, 3b) et agit sur l'organe d'activation (4).

9. Système selon l'une des revendications précédentes, **caractérisé en ce qu'**il comprend un mécanisme de libération actionnable par un utilisateur et agissant sur le mécanisme de verrouillage pour libérer au moins l'un desdits premier et second bras (3a, 3b) et permettre un pivotement dudit au moins un bras (3a, 3b) en éloignement par rapport à l'autre bras (3a, 3b).

10. Système selon l'une des revendications précédentes, **caractérisé en ce que** le mécanisme de libération comprend un organe de libération (6) faisant saillie sur l'embase (1), de préférence l'organe d'activation (4) est un bouton-poussoir.

11. Système selon l'une des revendications précédentes, **caractérisé en ce que** l'organe de libération (6) est porté par l'une des parois latérales (1a) de l'embase (1) ou par sa paroi supérieure (1c).

12. Système selon l'une des revendications précédentes, **caractérisé en ce que** les extrémités (8a, 8b) des deux bras (3a, 3b) ont été conformées pour présenter des surfaces d'appui (7a, 7b).

13. Ensemble support/bouteille comprenant un système d'accrochage selon l'une des revendications précédentes et une bouteille de gaz (9) retenue par les bras (3a, 3b) dudit système d'accrochage.
